# EUROPÄISCHE PATENTSCHRIFT

(11) **EP 2 956 339 B1**
(45) Veröffentlichungstag und Bekanntmachung des Hinweises auf die Patenterteilung: **30.01.2019**
(21) Anmeldenummer: 14703600.8
(22) Anmeldetag: 11.02.2014
(51) Int. Cl.: B60T 7/04, B60T 8/36

(54) **BREMSVORRICHTUNG MIT EINEM WEGSENSOR FÜR INTEGRIERTE KRAFTFAHRZEUGBREMSSYSTEME**
BRAKING DEVICE HAVING A TRAVEL SENSOR FOR INTEGRATED MOTOR VEHICLE BRAKE SYSTEMS
DISPOSITIF DE FREINAGE POURVU D'UN CAPTEUR DE COURSE POUR SYSTÈMES DE FREINAGE INTÉGRÉS DE VÉHICULE AUTOMOBILE

(30) Priorität: 13.02.2013 DE 102013202350
(43) Veröffentlichungstag der Anmeldung: 23.12.2015
(73) Patentinhaber: Continental Teves AG & Co. OHG, 60488 Frankfurt am Main (DE)
(72) Erfinder: JÜRGENS, Michael, 61200 Wölfersheim (DE)
(86) Internationale Anmeldenummer: PCT/EP2014/052608
(87) Internationale Veröffentlichungsnummer: WO 2014/124925

(56) Entgegenhaltungen:
- DE-A1-102005 018 649
- DE-A1-102009 033 499
- DE-A1-102010 040 720
- DE-A1-102010 045 617
- DE-A1-102011 081 463
- DE-A1-102012 212 141

## Beschreibung

Die Erfindung betrifft einen Wegsensor bestehend aus einem verschiebbaren Weggeber und einem Messaufnehmer in einer elektrohydraulische Vorrichtung gemäß Oberbegriff von Anspruch 1.

Der wesentliche Teil der elektrohydraulischen Bremsvorrichtungen, die heute bei Kraftfahrzeugen in Serie Verwendung finden, besteht immer noch zumindest aus einer Betätigungseinrichtung (Booster) mit einer üblicherweise hydraulischen oder pneumatischen Bremskraftverstärkung und einem getrennt davon angeordneten kompakten elektrohydraulischen Drucksteuer- bzw. Regelungsaggregat (HECU).

Bekannt geworden sind bereits elektrohydraulische Bremsensteuervorrichtungen mit Wegesensoren zur Erfassung des Betätigungswegs einer Bremsstange, bei denen der Wegsensor baulich getrennt oder zumindest außerhalb von dem Gehäuse der elektronischen Kontrolleinheit (ECU) angeordnet ist. Entsprechende Anordnungen mit Wegsensorik sind beispielsweise unter dem Begriff hydraulische "Brake-by-wire"-Bremse bekannt. Eine hierfür geeignete Wegsensoranordnung geht zum Beispiel aus der DE 100 10 042 A1 hervor.

Ebenfalls einen berührungslos arbeitenden Wegsensors für eine elektrohydraulische Bremse, der nach dem Hall-Prinzip arbeitet, beschreibt die DE 10 2004 058 875 A1. Der Sensormagnet ist direkt am Kolben positioniert. Der eigentliche Messaufnehmer des Wegsensors ist außerhalb an dem Gehäuse der Druckerzeugungseinheit bzw. Druckverstärkungseinheit angeordnet.

Die vorstehend beschriebenen Bremsvorrichtungen weisen eine räumliche Trennung der Druckerzeugungs- bzw.
- verstärkungseinrichtung (Booster) von der Drucksteuer- bzw. regelungseinheit auf. Dies ist auch bei einer "brake-by wire"-Bremse der Fall, wo auch das Pedalmodul zusammen mit einem Pedalgefühl-Simulator von der eigentlichen Bremsdruckregelungseinrichtung getrennt ist. In zunehmendem Maße besteht nun das Bestreben, auch Bremsvorrichtungen in größere Teile der Serie zu bringen, welche die räumliche Trennung von Betätigung und Drucksteuerung bzw. Regelung durch Zusammenfassung der elektrohydraulischen Komponenten zu einem kombinierten Aggregat aufheben.

DE 10 2010 040 720 A1 zeigt eine Bremsanlage für Kraftfahrzeuge mit einem Betrieb als Brake-by-Wire. Die Bremsanlage ist dabei aus mehreren Hauptgruppen aufgebaut, die austauschbare Module darstellen. Die Module sind physikalisch miteinander verbunden. Zudem ist eine Wegerfassungseinrichtung offenbart, welche den Betätigungsweg des ersten Kolbens erfassen kann.

DE 10 2012 212 141 A1 zeigt einen pneumatischen Bremskraftverstärker. Die Idee besteht darin, dass eine Zusammenfassung von einer Wegsensoranordnung und einer Drucksensoranordnung in einem gemeinsamen Modulgehäuse vorgenommen wird, was zu einer Bauraumeinsparung führt.

DE 10 2011 081 463 A1 zeigt ebenfalls eine Bremsanlage, welche mit einem verbesserten Bremsvermögen ausgestattet sein soll. Dies wird dadurch erreicht, dass die Ventile in bestimmter Weise angeordnet werden. Der Betätigungsweg des Bremspedals wird mittels eines Wegsensors erfasst, der dann für die Sollwertgenerierung in einer Steuereinheit dient.

DE 10 2005 018649 A1 zeigt eine Bremsanlage mit einer Betätigungseinrichtung und einer Steuer- und Regelungseinrichtung in einer integrierten Baueinheit mit einem Gehäuse eines Zylinders. Ein Wegsensor ist in dem Gehäuse angeordnet und kann direkt mit dem Steuergerät ohne elektrische Verbindungsleitungen kontaktiert werden.

Auch wenn derartige Anordnungen bereits an sich bekannt geworden sind, besteht immer noch die Möglichkeit, weitere Verbesserungen im Hinblick auf die Anforderungen der Automobilindustrie an Flexibilität, Bremsleistung und Komfort unter Einhaltung des dafür zur Verfügung stehenden Herstellungskostenrahmens vorzunehmen.

Die vorliegende Erfindung beschäftigt sich daher unter anderem mit dem Problem der Konstruktion eines zuverlässig und mit hoher Genauigkeit arbeitenden Wegsensors für eine Bremsvorrichtung, welche eine nochmals gesteigerte kompaktere Bauweise aufweisen soll und sich außerdem kostengünstig in Serie fertigen lässt.

Diese Aufgabe wird erfindungsgemäß gelöst durch eine Bremsvorrichtung mit einem Wegsensor, der aus einem verschiebbaren Weggeber und einem Messaufnehmer zum Erfassen einer Verschiebung oder Position in Betätigungsrichtung besteht, wobei die Bremsvorrichtung als kompaktes Aggregat aus einer gehäusten elektronischen Kontrolleinheit, einer Hydraulikeinheit und insbesondere einem Pumpenaggregat baulich verbunden ist, mit der Besonderheit, dass der Messaufnehmer an oder in die gehäuste elektronische Kontrolleinheit integriert ist und der Messaufnehmer direkt oder indirekt auf
einer Leiterplatte angeordnet ist, wobei die Leiterplatte entweder eine Hauptleiterplatte der elektrohydraulischen Vorrichtung oder eine zusätzliche, mit der Hauptleiterplatte elektrisch und insbesondere auch mechanisch verbundene Zusatzleiterplatte ist.

Der Messaufnehmer ist somit an oder in die gehäuste elektronische Kontrolleinheit integriert. Darunter ist zu verstehen, dass der Messaufnehmer elektrisch und mechanisch ohne dass ein zusätzliches Gehäuse für den Messaufnehmer benötigt wird, mit der elektronischen Kontrolleinheit direkt verbunden ist und das Gehäuse der Kontrolleinheit die Abdichtung des Messaufnehmers und einer ggf. vorhandenen Auswerteelektronik des Sensors gegenüber der in einem Kraftfahrzeug vorhandenen intensiven Umwelteinflüssen übernimmt, welche, bedingt sind beispielsweise durch Feuchtigkeit, Wärme, Staub und mechanische Erschütterungen.

Der vorstehende Aufbau einer Bremsvorrichtung hat eine ganze Reihe von Vorteilen. Ein Vorteil liegt darin, dass sich durch die Integration des Messaufnehmers und die Anordnung auf der Leiterplatte eine niederohmige Kontaktierung mit deutlich kürzeren Signalleitungslängen zwischen Sensor und der Elektronik zur Sensorsignalverarbeitung ergibt.

Vorzugsweise arbeitet der Wegsensor nach einem induktiven Prinzip, wobei insbesondere gemäß diesem Prinzip durch die Verschiebung des Weggebers eine Feldveränderung eines im Messaufnehmer angeordneten elektrischen Übertragers zur Wegbestimmung hervorgerufen wird. Durch den Einsatz eines induktiven Prinzips ergibt sich ein besonders einfacher Aufbau des Wegaufnehmers. Mit Hilfe der Übertragertechnik kann zum Beispiel in Verbindung mit einer zweckmäßig einzusetzenden digitalen Signalauswertung ein vergleichsweise ortsgenaues Wegsignal bereitgestellt werden.

Der Messaufnehmer ist auf einer Leiterplatte angeordnet, wobei die Leiterplatte entweder eine Hauptleiterplatte der elektrohydraulischen Vorrichtung oder eine zusätzliche, mit der Hauptleiterplatte elektrisch und insbesondere auch mechanisch verbundene Zusatzleiterplatte ist. Es kann sich hierbei auch um ein Gerüst aus Leiterplatten handeln, welche untereinander mechanisch und insbesondere auch elektrisch verbunden sind. Dies kann dann von Vorteil sein, wenn die Bauhöhe des Messaufnehmers im Hinblick auf den Abstand zum Messgeber aus konstruktiven Gründen angepasst werden muss. Konstruktive Lösungen, welche ein direktes Aufbringen des Messaufnehmers auf der Hauptplatine ermöglichen, sind allerdings aus Kostengründen zu bevorzugen.

Dabei befindet sich der Messaufnehmer zweckmäßigerweise zusammen mit einer etwaig notwendigen Signalverarbeitung auf der Leiterplatte (Zusatzleiterplatte oder Hauptleiterplatte).

Als Weggeber kann prinzipiell jedes ein Magnetfeld erzeugendes oder beeinflussendes Bauelement, wie beispielsweise ein Magnet oder eine elektrische Spule eingesetzt werden. Der Weggeber ist jedoch vorzugsweise ein beliebig geformter Permanentmagnet, der durch mechanische Kopplung mit der Bremsstange nach Maßgabe des Betätigungsweges der Bremsbetätigung entlang des Messaufnehmers bewegt wird. Besonders bevorzugt hat der Permanentmagnet eine zylindrige Form, damit dieser bündig mit der Oberfläche einer zylindrigen Schubstange ab-schließen kann.

Die elektrohydraulische Vorrichtung weist bevorzugt eine Einrichtung zur hydraulischen Verstärkung auf, die insbesondere auf dem Prinzip einer motorbetriebenen elektromechanischen Hydraulikpumpenanordnung beruht. Die Pumpe dieser Pumpenanordnung umfasst dabei nach einer bevorzugten Ausführungsform einen Plunger zur Hydraulikdruckerzeugung, der von einem hochdynamischen Elektromotor angetrieben wird.

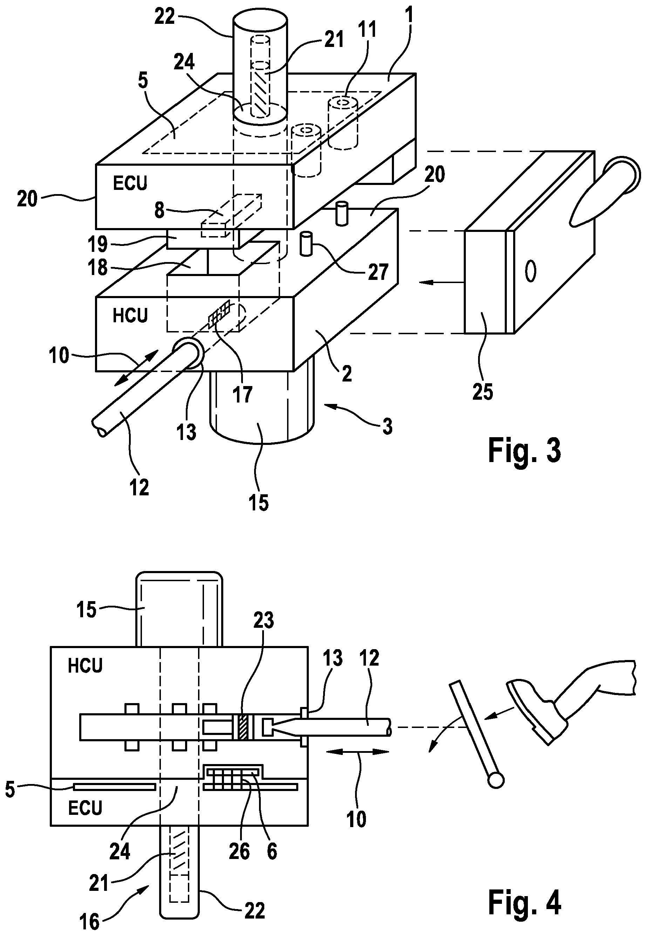

Nach einer weiteren bevorzugten Ausführungsform ragt der Messaufnehmer bzw. ein Teil davon in den Freiraum einer Ausnehmung an der Hydraulikeinheit hinein. Mit anderen Worten steht der Messaufnehmer über die flächige Begrenzung des offenen (in Fig. 3 unteren) Rand der Elektronikeinheit über, welcher mit der Hydraulikeinheit verbunden wird, wodurch der Messaufnehmer gemeinsam mit den Ventilspulen und der Elektronik durch das Gehäuse der Elektronikeinheit wasserdicht verschlossen wird. Zwar ist es möglich, dass dabei der vorstehende Teil des Messaufnehmers von einem vorspringenden Teil des Gehäuses der Kontrolleinheit ganz oder teilweise umschlossen wird, jedoch ist dies nicht notwendig, da durch Verbindung des Elektronikgehäuses mit der Hydraulikeinheit die Notwendigkeit einer zusätzlichen Verschließung für den Sensor entfällt. Daraus ergibt sich auf Grund der Einsparung von elektronischen Verbindungen, zusätzlichen Gehäuseteilen und dafür sonst notwendigen Befestigungsmitteln ein wesentlicher Vorteil gegenüber Bremsenregleranordnungen, bei denen der Wegaufnehmer in einem separaten Gehäuse angeordnet ist.

Nach einer weiteren bevorzugten Ausführungsform ist die Betätigungsrichtung des Wegsensors senkrecht zur Kolbenachse des Plungers ausgerichtet. Hierdurch kann eine weitere Verringerung des Bauvolumens des Gesamtbremsaggregats erreicht werden. Eine besonders bevorzugte Weiterbildung besteht darin, dass das Aggregat so aufgebaut ist, dass das Gehäuse der Pumpe durch das Elektronikgehäuse ganz oder teilweise hindurchtritt. Auf diese Weise kann das Volumen des für das Gesamtaggregat benötigten Bauraums im Kraftfahrzeug noch weiter verringert werden. Hierzu weist insbesondere das Gehäuse und/oder die Hauptleiterplatte eine Durchtrittsöffnung auf.

Das Material des magnetischen Kerns kann einlagig aber auch mehrlagig ausgeführt sein. Der Messaufnehmer des Wegsensors enthält vorzugsweise einen Magnetkern aus einem Schichtmaterial, wobei das Schichtmaterial insbesondere als ein Folienstapel oder ein Folienpaket des magnetischen Kernmaterials ausgebildet ist. Das Kernmaterial besteht insbesondere aus einem weichmagnetischen Werkstoff. Durch einen geeigneten Aufbau des Magnetkerns des Messaufnehmers ist es möglich, denn Sensor hinreichend unempfindlich gegen elektromagnetische Störungen auszubilden, welche in einem Bremsregelaggregat, das eine elektrisch angetriebene Pumpe und eine Vielzahl von Magnetspulen enthält, besonders durch die von der Integration hervorgerufene bauliche Nähe von besonders hoher Intensität sind. In Verbindung mit der Integration des Wegsensors in die Bremsvorrichtung und die sich daraus ergebenden kürzeren Signalleitungswege erhält man insgesamt ein Wegsensorsystem, welches deutlich unempfindlicher gegenüber ektromagnetischen Störungen ist und außerdem eine verbesserte Ortsauflösung und Dynamik aufweist.

Eine einfache und vorteilhafte Herstellung des Messaufnehmers ergibt sich durch die Anordnung des Magnetkerns auf oder in einem Verdrahtungsträger (Leadframe), einer Leiterplatte oder einem anderen Substrat.

Nach einer Weiterbildung der Erfindung ist der Messaufnehmer ein sogenannter linearer Wegsensor (LIPS), der nach dem an sich bekannten Differenztrafo-Prinzip arbeitet. Das Funktionsprinzip ähnelt einem Transformator mit Primär- und Sekundärspule, bei dem die Induktivität des Transformatorkerns und damit die Übertragung verändert wird. Wenn an die Primärspule ein elektrisches Wechselspannungssignal angelegt wird, induziert der Strom über den magnetischen Kern des Sensors in der Sekundärspulen ein identisches Ausgangssignal induziert, sofern kein Positionsgebermagnet in der Nähe ist. Nähert sich jetzt der Positionsgebermagnet, der von der Schubstange mitgeführt wird, der Sekundärspule, so treibt er den magnetischen Kern in die Sättigung. Dies führt zu einem veränderten Übertragungsverhalten des elektrischen Wechselspannungssignals zwischen der Primärspule der entsprechenden Sekundärspule, dem sich der Gebermagnet genähert hat, was in einer dem Fachmann bekannten Weise über den Sensorschaltkreis ausgewertet werden kann. Auf diese Weise kann die Position des Gebermagneten mit dem Messaufnehmer erfasst werden.

Bevorzugt werden im Messaufnehmer zwei Sekundärspulen eingesetzt, die insbesondere baugleich sind, was für die Signalqualität und Genauigkeit der Auswertung von Vorteil ist.

Um die Spulen aufzunehmen, ist der Messaufnehmer zweckmäßigerweise in mehrere Wickelbereiche unterteilt, die dann mit den entsprechenden galvanisch getrennten Spulendrähten bewickelt werden. Besonders bevorzugt wird dabei die Primärspule über alle Wickelbereiche hinweg aufgewickelt, während die eine oder mehreren Sekundärspulen lediglich in Teilbereichen aufgewickelt ist/sind.

Gemäß einer weiteren bevorzugten Ausführungsform des angegebenen Sensors ist der Messaufnehmer ein elektrischer Übertrager, insbesondere ein linearer induktiver Positionssensor, LIPS genannt, der eingerichtet ist, wenigstens ein Referenzsignal in Abhängigkeit einer Position des Geberelements als Gebersignal zu übertragen. Bei dem Übertrager kann es sich um das oben erwähnte den magnetischen Fluss wandelnde elektrische Bauelement handeln. Im Rahmen des angegebenen Sensors soll unter einem Übertrager ein elektrischen Bauelement verstanden werden, dass zwei voneinander galvanisch getrennte Spulen aufweist, die untereinander über ein gemeinsames Kontaktmedium wie Luft oder den oben genannten magnetischen Kern elektrische Energie übertragen. Ist das Geberelement beispielsweise selbst ein Magnet, dann ändert es die Übertragungseigenschaften des gemeinsamen Kontaktmediums, was sich in einem veränderten Übertragungsverhalten der beiden Spulen zeigt. Bei einem LIPS soll es sich im Rahmen des angegebenen Sensors um einen Übertrager handeln, der eine dritte Spule aufweist, wobei die zweite und dritte Spule zum Austausch elektrischer Energie mit der ersten Spule angeordnet sind. Je nach Lage des als Magnet ausgebildeten Geberelementes zu zweiten und dritten Spule ergibt sich eine bestimmte Konstellation der Übertragungsverhältnisse zwischen der ersten und zweiten sowie der ersten und dritten Spule. Da die Lage des Geberelementes nun mit zwei verschiedenen Übertragungsverhältnissen an zwei verschiedenen Orten er-fasst wird, kann die oben genannte Sättigung des magnetischen Kerns in der Erfassung Positionserfassung mit verwendet werden.

Wenn die Spulen in dem Übertrager über einen Spulenkörper auf einen magnetischen Kern aufgewickelt sind, weist der magnetische Kern in einer bevorzugten Weiterbildung einen Ausdehnungskoeffizienten auf, der im Bereich eines Ausdehnungskoeffizienten des Spulenkörpers liegt. Auf diese Weise kann der Spulenkörper direkt auf den magnetischen Kern beispielsweise durch Umspritzen mit einem Duroplast aufgebracht werden, ohne dass Einträge von mechanischen Spannungen auf den magnetischen Kern und somit Verfälschungen des Messergebnisses mit dem Übertrager auftreten würden. Anderenfalls müssten diese Einträge von mechanischen Spannungen durch eine Lagerung des magnetischen Kerns in einem elastischen Material innerhalb des Spulenkörpers vermieden werden.

Als magnetischer Kern können weichmagnetische Werkstoffe, wie beispielsweise Eisen-Nickel-Magnete mit und ohne Magnetostriktionsfreiheit gewählt werden. Unter einer Magnetostriktion soll nachstehend die Änderung magnetischer Kenngrößen wie magnetische Feldstärke, magnetische Flussdichte oder magnetische Permeabilität durch eine mechanische Beanspruchung wie Druck oder Zugspannung verstanden werden. Durch das spannungsfreie Einlegen des magnetischen Kerns in die Ausnehmung kann die Magnetostriktion vermieden werden.

Die Wegsensoranordnung ist vorzugsweise redundant ausgebildet und weist vorzugsweise zwei erste Sekundärspulen und zwei zweite Sekundärspulen auf, welche mit der Signalverarbeitungseinheit oder mit jeweils einer Signalverarbeitungseinheit verbunden sind.

Innerhalb des Wegaufnehmers oder in räumlicher Nähe des Wegaufnehmers ist bevorzugt eine eigene digitale Signalverarbeitungselektronik angeordnet, mit der das Wegsensorsignal bereitgestellt werden kann. Die Signalverarbeitungselektronik umfasst für eine komplexe Signalauswertung zweckmäßigerweise einen Mikrocontroller für die Berechnungsaufgaben.

Besonders bevorzugt erfasst die digitale Signalverarbeitungselektronik wenigstens einer elektrischen Größe der beiden Sekundärspulen und ermittelt damit die Position und/oder Auslenkung ermittelt. Besonders bevorzugt umfasst die Signalverarbeitungseinheit für diesen Zweck wenigstens ein nachstehend näher beschriebenes Goertzelfilter für eine frequenzselektive Amplitudenberechnung.

Unter einem Goertzelfilter bzw. Goertzel- Algorithmus wird eine 1-Punkt diskrete Fouriertransformation verstanden, nach einem definierten Algorithmus, die als Ergebnis die Amplitude des zugeführten Signals liefert. Die Phaseninformation kann insbesondere entfallen. Im Gegensatz zur FFT, fast Fourier Transformation, bietet sich der Goertzel-Algorithmus stets an, wenn eine bekannte, diskrete Frequenz ausgewertet werden soll. Dies ist in der Wegsensoranordnung der Fall. Es kann sodann insbesondere eine steilflankig, frequenzselektive Amplitudenberechnung auch auf einfachen, preiswerten µC erfolgen. Die Wegsensoranordnung umfasst dann zumindest eine Primärspule, wenigstens eine erste und eine zweite Sekundärspule, mindestens ein weichmagnetisches Kopplungselement (Magnetkern), das die Primärspule und die beiden Sekundärspulen magnetisch koppelt, wobei der Wegsensor so ausgebildet ist, dass eine Position und/oder Auslenkung in Abhängigkeit der magnetischen Kopplung zwischen der Primärspulen und zumindest der ersten und zweiten Sekundärspule erfasst wird, wobei die Wegsensoranordnung eine Signalverarbeitungseinheit umfasst.

Weitere bevorzugte Ausführungsformen ergeben sich aus den Unteransprüchen und der nachfolgenden Beschreibung eines Ausführungsbeispiels an Hand von Figuren.

Es zeigen
Fig. 1 ein Ausführungsbeispiel der Erfindung in schematischer Darstellung,
Fig. 2 die Integration eines Wegaufnehmers in das Elektronikgehäuse,
Fig. 3 ein Gesamtaggregat für eine elektrohydraulische Bremse mit einem in einer Vertiefung sitzenden Wegaufnehmer und
Fig. 4 das Gesamtaggregat nach Fig. 3 im Schnitt.

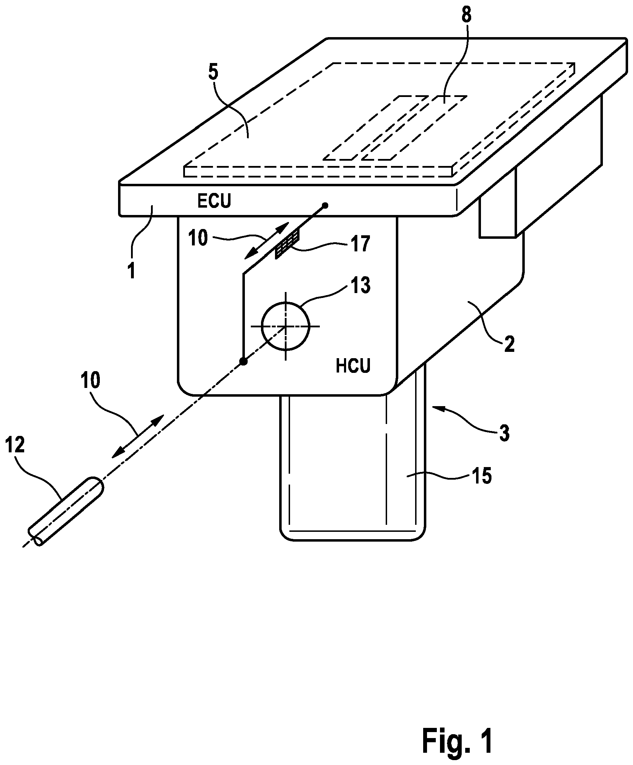

In Fig. 1 sind nur einige der für die Erfindung relevanten Baugruppen dargestellt. Elektronische Kontrolleinheit (ECU) 1 ist mit Hydraulikblock (HCU) 2 und Pumpenaggregat 3 zu einem gemeinsamen Bremsenaggregat vereint.

Wegsensor 4 besteht aus Messaufnehmer 8 und Weggeber 17. Weggeber 17 ist beispielsweise ein Permanentmagnet 23 (Fig. 4), welcher über eine mechanische Verbindung mit einer Betätigungseinrichtung (Pedalstange 12, die durch Führung 13 geführt ist) in Betätigungsrichtung 10 bewegt wird. Weggeber 17 erzeugt somit das zu sensierende wegabhängige Magnetfeld, welches von Messaufnehmer 8 erfasst wird.

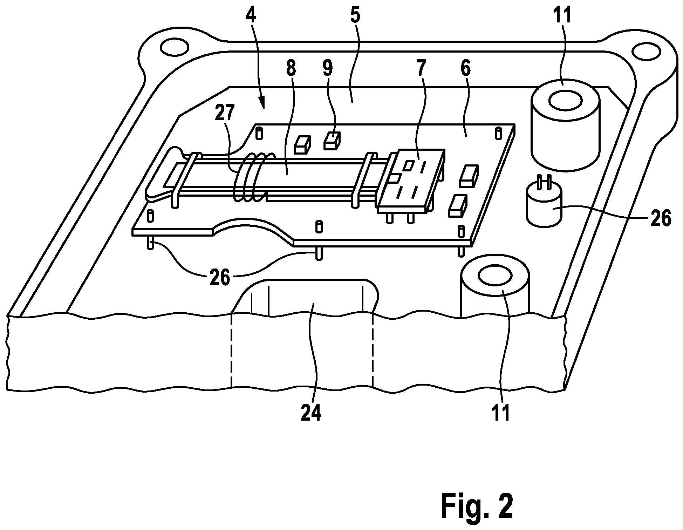

In Fig. 2 ist die elektronische Kontrolleinheit 1 von der offenen Seite her dargestellt. Im durch das Gehäuse 20 umschlossenen Volumenbereich sind die für ein elektrohydraulisches Druckregelaggregat üblichen Komponenten, wie beispielsweise Hauptplatine 5, Ventilspulen 11 und Drucksensoren 26 angeordnet. Ventilspulen 11 dienen zur Ansteuerung von Ventildomen 27 (Fig. 3) .

Im Gegensatz zum Ausführungsbeispiel in Fig. 1 ist Messaufnehmer 8 auf einer Zusatzleiterplatte 6 angeordnet. Zusatzleiterplatte 6 ist mechanisch und je nach Verbindung auch zusätzlich elektrisch mit Hauptleiterplatte 5 über Einpresspins 26 verbunden. Vorzugsweise ist eine elektronische Signalvorverarbeitungsschaltung mit aktiven und/oder passiven elektrischen Bauelementen 9 direkt auf der Zusatzleiterplatte 6 angeordnet.

Im dargestellten Ausführungsbeispiel ist Messaufnehmer 8 selbst auf einer kleinen Trägerleiterplatte 27 befestigt. Eine solche Trägerplatte ist nicht zwingend vorgesehen, wenn sich der Messaufnehmer in Serienproduktion auch direkt auf der Zusatzleiterplatte 6 oder der Hauptleiterplatte 5 befestigen lässt.

Wegsensor 4 kann durch eine Anordnung aus einer Sensorleiterplatte 7 bestehen, die elektrisch und insbesondere mechanisch mit der Hauptleiterplatte 5 oder Zusatzleiterplatte 6 verbunden ist, und einem Sensorkörper 8. Bei Messaufnehmer 8 kann es sich um einen beliebigen an sich bekannten wegsensierenden magnetfeldabhängigen Messwandler zur Umwandlung der Position eines Magnetfelds in ein elektrisches Signal handeln. Im dargestellten Beispiel wird Messaufnehmer 6 zum Beispiel durch einen Ferritkern gebildet, der mit einer elektrischen Spule 27 umwickelt ist. Die Anordnung der Spule in der Figur ist nur beispielhaft zu sehen. Im Fall eines Differenzspulenwandlers sind dann zwei oder mehrere galvanisch getrennte Spulenwicklungen vorhanden. Der Messaufnehmer kann zweckmäßigerweise als ein gehäustes elektronisches Sensorbauelement, beispielsweise mit einem umspritzten Kunststoffgehäuse ausgebildet sind. Ein gehäuster Messaufnehmer wird zur Vereinfachung der elektronischen Fertigung beispielsweise in Form eines SMD-lötbaren elektronischen Bauelements eingesetzt. Das vorstehend beschriebene Bauelement kann, wenn es zweckmäßig ist, auch mehrfach vorhanden sein, zum Beispiel angeordnet in Richtung der Verschiebeachse des Sensors.

Im Falle einer direkten Anordnung des Messaufnehmers 8 auf der Hauptleiterplatte 7 erhält man eine besonders kompakte Bauweise, was zu einer nochmaligen Verkleinerung des Gesamtaggregats aus Wegsensor und Bremsvorrichtung führt. Die Signalqualität des Sensors lässt sich auf diese Weise noch weiter verbessern, was auf wegfallende Übergangswiderstände der Kontaktstellen und insgesamt kürzere Signalleitungen zurückgeführt werden kann. Zur Verbesserung der Genauigkeit hat es sich auch als zweckmäßig erwiesen, die Elektronik 9 zur Verarbeitung des Sensorsignals, welche insbesondere überwiegend digital vorgenommen wird, in direkter räumlicher Nähe des Messaufnehmers anzuordnen. Es ist dann besonders zweckmäßig, den Messaufnehmer und die Elektronik 9 für die Signalverarbeitung gemeinsam zu umspritzen.

Die integrierte elektromechanischen Anordnung 14 zur Verstärkung des Bremswunsches ist vorzugsweise zusammengesetzt auf einem hochdynamischen Elektromotor 15 und einer Pumpe 16, wobei die Pumpe bevorzugt nach den hydraulischen Druck mit einem Plunger 21 heute bei Kraftfahrzeugen im Serieneinsatz eingebauten erzeugt arbeitet.

In Fig. 3 und Fig. 4 ist dargestellt, dass Messaufnehmer 8 von einem vorspringenden Teil 19 des Gehäuses 2 der Kontrolleinheit 1 ganz oder teilweise umschlossen wird. Dieses ragt in den Freiraum einer Ausnehmung 18 an der Hydraulikeinheit 2 hinein.

Gemäß einem weiteren, nicht dargestellten umgekehrten Ausführungsbeispiel, ragt Weggeber 17 über eine der äußeren weitgehend planen Oberflächen 20 hinaus und sitzt damit innerhalb des vom Gehäuses 20 der elektronischen Kontrolleinheit 1 eingeschlossenen Volumens.

Gehäuse 22 der Pumpe 3 durch das Elektronikgehäuse 1 ganz oder teilweise hindurchtritt, wobei hierzu insbesondere das Gehäuse 2 und/oder die Hauptleiterplatte 5 eine Durchtrittsöffnung 24 aufweist. Da es gemäß einer alternativen Ausführungsform möglich ist, Hauptleiterplatte 5 sandwichartig mehrfach auszuführen, ergibt sich je nach deren räumlichen Erstreckung, dass die Durchtrittsöffnung 24 dann bei jeder dieser Leiterplatten erforderlich ist.

Bremsflüssigkeitsbehälter 25 ist an einer weitestgehend ebenen Seite der hydraulischen Einheit angebracht, durch die weder die Plungerachse noch die Pedalachse 12 hindurchtritt, woraus sich auch die räumliche Gesamtausrichtung des Aggregats im Fahrzeug ergibt. Diese Anordnung ergibt eine besonders kompakte Bauform des Gesamtaggregats für eine hochintegrierte elektrohydraulische Bremsanlage, bei der die räumliche Trennung von Bremsdruckerzeugung bzw. -verstärkung und Bremsdruckregelung aufgehoben ist. Dies ermöglicht eine Anordnung des Bremsaggregats im Motorraum eines Kraftfahrzeugs direkt im Bereich des Austritts der Pedalachse.

In Fig. 4 ist Weggeber 17 ist als zylinderförmiger Permanentmagnet 23 ausgeführt, der durch die Pedalbetätigung eines Fahrers und einer damit verbundenen Pedalstange 12 in Richtung 10 verschoben wird.

## Patentansprüche

1. Bremsvorrichtung mit einem Wegsensor (4), der aus einem verschiebbaren Weggeber (17, 23) und einem Messaufnehmer (8) zum Erfassen einer Verschiebung oder Position in Betätigungsrichtung (10) besteht, wobei die Bremsvorrichtung als kompaktes Aggregat aus einer gehäusten elektronischen Kontrolleinheit (1), einer Hydraulikeinheit (2) und insbesondere einem Pumpenaggregat (3) baulich verbunden ist, **dadurch gekennzeichnet, dass**
- der Messaufnehmer (8) an oder in die gehäuste elektronische Kontrolleinheit (1) integriert und
- der Messaufnehmer (4) direkt oder indirekt auf einer Leiterplatte (5, 6) angeordnet ist, wobei die Leiterplatte (5, 6) entweder eine Hauptleiterplatte (5) der Bremsvorrichtung oder eine
zusätzliche, mit der Hauptleiterplatte elektrisch und insbesondere auch mechanisch verbundene Zusatzleiterplatte (6) ist.

2. Bremsvorrichtung nach Anspruch 1, **dadurch gekennzeichnet, dass** der Wegsensor nach einem induktiven Prinzip arbeitet, wobei insbesondere durch die Verschiebung des Weggebers (17, 23) eine Feldveränderung eines im Messaufnehmer angeordneten elektrischen Übertragers zur Wegbestimmung hervorgerufen wird.

3. Bremsvorrichtung nach Anspruch 1 oder 2, **dadurch gekennzeichnet, dass** die Bremsvorrichtung eine Einrichtung zur hydraulischen Verstärkung aufweist, die insbesondere auf dem Prinzip einer motorbetriebenen elektromechanischen Hydraulikpumpenanordnung (3) beruht.

4. Bremsvorrichtung nach Anspruch 3, **dadurch gekennzeichnet, dass** die Pumpe der Hydraulikpumpenanordnung (3) einen Plunger (21) zur Hydraulikdruckerzeugung umfasst, der von einem hochdynamischen Elektromotor (15) angetrieben wird.

5. Bremsvorrichtung nach mindestens einem der Ansprüche 1 bis 4, **dadurch gekennzeichnet, dass** zumindest ein Teil des Messaufnehmers (8) in den Freiraum einer Ausnehmung (18) an der Hydraulikeinheit (2) hineinragt und durch das Gehäuse (20) der Kontrolleinheit (1) ganz oder teilweise umschlossen wird.

6. Bremsvorrichtung nach mindestens einem der Ansprüche 1 bis 5, **dadurch gekennzeichnet, dass** die Betätigungsrichtung (10) des Wegsensors (4) senkrecht zur Kolbenachse des Plungers (21) angeordnet ist.

7. Bremsvorrichtung nach mindestens einem der Ansprüche 1 bis 6, **dadurch gekennzeichnet, dass** das Gehäuse (22) der Pumpe (3) durch das Elektronikgehäuse (1) ganz oder teilweise hindurchtritt, wobei hierzu insbesondere das Gehäuse (2) und/oder die Hauptleiterplatte (5) eine Durchtrittsöffnung (24) aufweist.

8. Bremsvorrichtung nach mindestens einem der Ansprüche 1 bis 7, **dadurch gekennzeichnet, dass** der Weggeber (17) als Permanentmagnet (23) ausgeführt ist.

9. Bremsvorrichtung nach mindestens einem der Ansprüche 1 bis 8, **dadurch gekennzeichnet, dass** der Messaufnehmer (8) einen Magnetkern aus einem Schichtmaterial enthält.

10. Bremsvorrichtung nach mindestens einem der Ansprüche 1 bis 9, **dadurch gekennzeichnet, dass** innerhalb des Wegaufnehmers oder in räumlicher Nähe des Wegaufnehmers eine eigene digitale Signalverarbeitungselektronik angeordnet ist.

## Claims

1. Brake device having a travel sensor (4) which is composed of a movable travel signal generator (17, 23) and a measuring pickup (8) for sensing a movement or position in the activation direction (10), wherein the brake device is structurally combined as a compact assembly composed of a housed electronic control unit (1), a hydraulic unit (2) and, in particular, a pump assembly (3), **characterized in that**
- the measuring pickup (8) is integrated onto or into the housed electronic control unit (1), and
- the measuring pickup (8) is arranged directly or indirectly on a printed circuit board (5, 6), wherein the printed circuit board (5, 6) is either a main printed circuit board (5) of the brake device or an additional auxiliary printed circuit board (6) which is connected to the main printed circuit board electrically and, in particular, also mechanically.

2. Brake device according to Claim 1, **characterized in that** the travel sensor operates according to an inductive principle, wherein, in particular, a change in the field of an electrical transformer, arranged in the measuring pickup, for determining the travel is caused by the movement of the travel signal generator (17, 23).

3. Brake device according to Claim 1 or 2, **characterized in that** the brake device has an apparatus for hydraulic boosting, which apparatus is based, in particular, on the principle of a motor-operated electromechanical hydraulic pump arrangement (3).

4. Brake device according to Claim 3, **characterized in that** the pump of the hydraulic pump arrangement (3) comprises a plunger (21) for generating hydraulic pressure, which plunger (21) is driven by a highly dynamic electric motor (15).

5. Brake device according to at least one of Claims 1 to 4, **characterized in that** at least a part of the measuring pickup (8) projects into the free space of a cutout (18) on the hydraulic unit (2) and is entirely or partially enclosed by the housing (20) of the control unit (1).

6. Brake device according to at least one of Claims 1 to 5, **characterized in that** the activation direction (10) of the travel sensor (4) is arranged perpendicularly with respect to the piston axis of the plunger (21).

7. Brake device according to at least one of Claims 1 to 6, **characterized in that** the housing (22) of the pump (3) passes entirely or partially through the electronics housing (1), wherein for this purpose, in particular, the housing (2) and/or the main printed circuit board (5) have/has a through-opening (24).

8. Brake device according to at least one of Claims 1 to 7, **characterized in that** the travel signal generator (17) is embodied as a permanent magnet (23).

9. Brake device according to at least one of Claims 1 to 8, **characterized in that** the measuring pickup (8) contains a magnetic core made of a layered material.

10. Brake device according to at least one of Claims 1 to 9, **characterized in that** separate digital signal processing electronics are arranged within the travel pickup or in spatial proximity of the travel pickup.

## Revendications

1. Dispositif de freinage pourvu d'un capteur de course (4), qui se compose d'un émetteur de course déplaçable (17, 23) et d'un enregistreur de mesure (8) pour détecter un déplacement ou une position dans la direction d'actionnement (10), dans lequel le dispositif de freinage est construit sous la forme d'un ensemble compact à partir d'une unité de contrôle électronique encapsulée (1), d'une unité hydraulique (2) et en particulier d'un ensemble de pompe (3), **caractérisé en ce que**
- l'enregistreur de mesure (8) est intégré sur ou dans l'unité de contrôle électronique encapsulée (1) et
- l'enregistreur de mesure (4) est disposé directement ou indirectement sur une plaquette de circuits imprimés (5, 6), dans lequel la plaquette de circuits imprimés (5, 6) est soit une plaquette de circuits imprimés principale (5) du dispositif de freinage soit une plaquette de circuits imprimés auxiliaire (6) supplémentaire reliée électriquement et en particulier aussi mécaniquement à la plaquette de circuits imprimés principale.

2. Dispositif de freinage selon la revendication 1, **caractérisé en ce que** le capteur de course travaille selon un principe inductif, dans lequel on suscite, en particulier par le déplacement de l'émetteur de course (17, 23), une variation de champ d'un transmetteur électrique disposé dans l'enregistreur de mesure pour la détermination de la course.

3. Dispositif de freinage selon la revendication 1 ou 2, **caractérisé en ce que** le dispositif de freinage présente un dispositif d'amplification hydraulique, qui repose en particulier sur le principe d'un ensemble électromécanique de pompe hydraulique (3) entraîné par un moteur.

4. Dispositif de freinage selon la revendication 3, **caractérisé en ce que** la pompe de l'ensemble de pompe hydraulique (3) comprend un plongeur (21) pour la production de pression hydraulique, qui est entraîné par un moteur électrique hautement dynamique (15).

5. Dispositif de freinage selon au moins une des revendications 1 à 4, **caractérisé en ce qu'**au moins une partie de l'enregistreur de mesure (8) pénètre dans l'espace libre d'un évidement (18) sur l'unité hydraulique (2) et est entièrement ou partiellement enveloppée par le boîtier (20) de l'unité de contrôle (1) .

6. Dispositif de freinage selon au moins une des revendications 1 à 5, **caractérisé en ce que** le dispositif d'actionnement (10) du capteur de course (4) est disposé perpendiculairement à l'axe de piston du plongeur (21).

7. Dispositif de freinage selon au moins une des revendications 1 à 6, **caractérisé en ce que** le boîtier (22) de la pompe (3) passe totalement ou partiellement à travers le boîtier électronique (1), dans lequel notamment le boîtier (2) et/ou la plaquette de circuits imprimés principale (5) présente à cet effet une ouverture de passage (24).

8. Dispositif de freinage selon au moins une des revendications 1 à 7, **caractérisé en ce que** l'émetteur de course (17) est constitué par un aimant permanent (23) .

9. Dispositif de freinage selon au moins une des revendications 1 à 8, **caractérisé en ce que** l'enregistreur de course (8) contient un noyau magnétique en un matériau feuilleté.

10. Dispositif de freinage selon au moins une des revendications 1 à 9, **caractérisé en ce qu'**une électronique de traitement de signaux numérique propre est disposée à l'intérieur de l'enregistreur de course ou à proximité spatiale de l'enregistreur de course.
